# EUROPEAN PATENT SPECIFICATION

(11) **EP 1 396 304 B1**
(45) Date of publication and mention of the grant of the patent: **06.07.2005**
(21) Application number: 03026616.7
(22) Date of filing: 09.03.2001
(51) Int. Cl.: B23D 15/02

(54) **Cutting apparatus for welding machine**
Schneidvorrichtung
Appareil de coupage

(30) Priority: 17.05.2000 JP 2000145230
(43) Date of publication of application: 10.03.2004
(62) Divisional of application: 01105883.1
(73) Proprietor: MITSUBISHI DENKI KABUSHIKI KAISHA, Tokyo 100-8310 (JP)
(72) Inventor: Miyata, Junji, Chiyoda-ku Tokyo 100-8310 (JP); Nakatani, Nobuyoshi, Mitsubishi Elec. Eng. Co.Ltd., Chiyoda-ku Tokyo 100-0004 (JP)
(74) Representative: Popp, Eugen, Dr.

(56) References cited:
- GB-A- 227 814
- US-A- 2 753 937
- US-A- 5 575 186

## Description

### BACKGROUND OF THE INVENTION

### 1. Field of the Invention

The present invention relates to a cutting apparatus for a welding machine, provided with a pair of upper and lower blade portions facing each other, an upper blade portion ascending/descending link means for moving the upper blade portion up and down to the lower blade portion, a plurality of ascending/descending guide means for guiding abutment between the upper and lower blade portions and an ascending/descending drive means for ascending and descending the upper blade portion through the upper blade ascending/descending link means, and for example, to a cutting apparatus for a seam welding machine for bonding a tail end portion of a leading plate and a tip end portion of a trailing plate in a process line of metal plates.

### 2. The Related Art

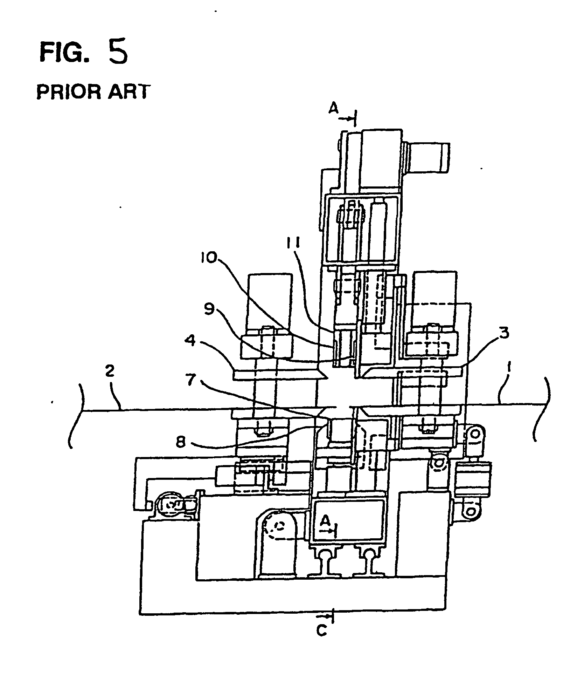

The conventional technology will now be described with reference to Figs. 5 to 7.

Figs. 5 to 7 schematically show a cutting apparatus for a mushroom welding machine used in a process line of metal plates disclosed in Japanese Examined Utility Model Publication No. Sho 62-39902, further including a current structure for showing details.

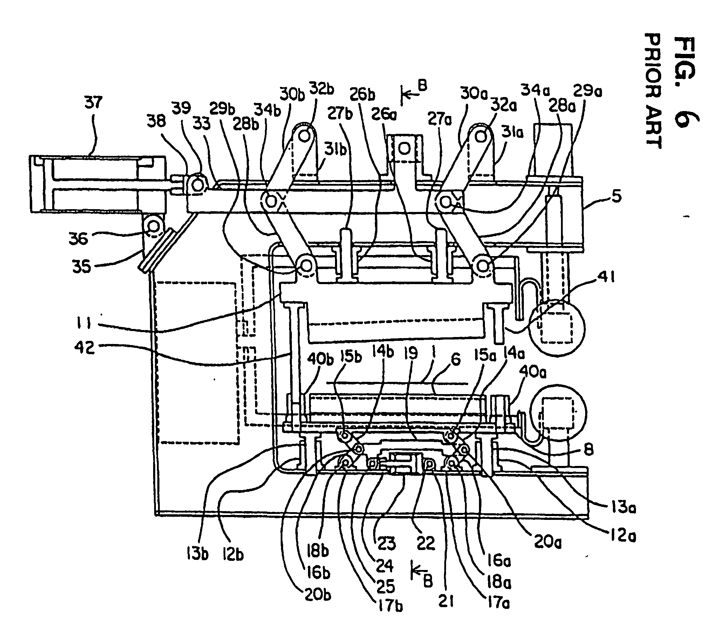

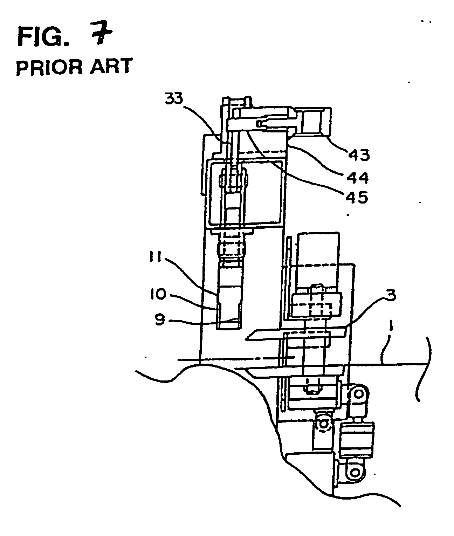

Fig. 5 is a frontal view, Fig. 6 is a cross-sectional view taken along the line A-A of Fig. 5 and Fig. 7 is a cross-sectional view taken along the line B-B of Fig. 6.

In the cutting apparatus for a welding machine shown in Figs. 5 to 7, first of all, a tail end portion of a leading plate 1 and a tip end portion of a trailing plate 2 are stopped within a mushroom welding machine, and thereafter, are fixed by leading plate clamps 3 and trailing plate clamps 4.

After the fixation, a lower blade holder 8 (hereinafter also referred to as lower blade portion) on which mounted are a leading plate cutting lower blade 6 and a trailing plate cutting lower blade 7 is raised within a carriage C frame 5 as an apparatus frame shown in Fig. 6, and at the same time, an upper blade holder 11 (hereinafter also referred to as upper blade portion) on which mounted are a leading plate cutting upper blade 9 and a trailing plate cutting upper blade 10 is lowered within the frame, so that the tail end portion of the above-described leading plate 1 and the tip end portion of the trailing plate 2 are cut in parallel prior to the welding operation.

When the cutting operation has been carried out, the lower holder (lower blade portion) 8 is lowered, and at the same time, the upper holder (upper blade portion) 11 is raised so that a double cut shear that has cut the tail end of the leading plate 1 and the tip end of the trailing plate 2 is returned back to the original position. After that, other devices within the welding machine take further steps for welding.

The above-described lower blade portion designates a portion including the leading plate cutting lower blade 6, the trailing plate cutting lower blade 7 and the lower holder 8, and the above-described upper blade portion designates a portion including the leading plate cutting upper blade 9, the trailing plate cutting upper blade 10 and the upper holder 11.

In Fig. 6, on the lower blade portion side, the lower blade holder 8 of the lower blade portion is guided by a guide bearing 12a and a guide bearing 12b mounted on the carriage C frame 5 as the apparatus frame and the ascending/descending guide means is composed mainly of a guide shaft 13a and a guide shaft 13b so as to be movable in the vertical direction.

The lower blade ascending/descending link means will now be described.

First of all, on the lower blade portion side, one side of a link 14a is coupled rotatably with a shaft 15a mounted on a lower side of one end side of the lower holder 8, whereas one side of the other link 14b is coupled rotatably with a shaft 15b mounted on a lower side of the other end side of the lower holder 8.

Also, one end side of a link 16a is coupled rotatably with a shaft 18a fitted in a bracket 17a mounted on the lower side of the carriage C frame 5, whereas one end side of the other link 16b is coupled rotatably with a shaft 18b fitted in a bracket 17b mounted on the lower side of the carriage C frame 5.

Also, the link 14a and the link 16a are coupled rotatably with one shaft 20a of shaft 20a and shaft 20b provided on both sides of a link 19, whereas the link 14b and the link 16b are coupled rotatably on the other shaft 20b to form a parallel link mechanism.

The ascending/descending drive means on the lower blade portion side will now be described.

A crevice type cylinder 23 is used as the ascending/descending drive means on the lower blade portion side. A crevice portion of the crevice type cylinder 23 is coupled rotatably with a shaft 22 engaged with a bracket 21 mounted on the carriage C frame 5 as the apparatus frame.

This crevice type cylinder 23 is coupled with the link 19, constituting the lower blade portion ascending and descending means, through a tip end metal member 24 mounted at the tip end of a piston rod thereof and a shaft 25 engaged with this tip end metal member 24.

The upper blade portion side ascending/descending guide means will now be described.

On the upper blade portion side, a guide shaft 27a and a guide shaft 27b are arranged so that the upper blade holder 11 is guided by a guide bearing 26a and a guide bearing 26b mounted on the carriage C frame 5 as the apparatus frame so as to be movable vertically.

The upper blade portion ascending/descending means will now be described.

On the upper blade portion side, one side of a link 28a is coupled rotatably with a shaft 29a mounted on an upper side of one end side of the upper holder 11, whereas one side of the other link 28b is coupled rotatably with a shaft 29b mounted on an upper side of the other end side of the upper holder 11.

Also, one end side of a link 30a is coupled rotatably with a shaft 32a fitted in a bracket 31a mounted on the upper side of the carriage C frame 5, whereas one end side of the other link 30b is coupled rotatably with a shaft 32b fitted in a bracket 31b mounted on the upper side of the carriage C frame 5.

Also, shafts 34a and 34b are provided on a link 33. The link 28a and the link 30a are coupled rotatably with the shaft 34a,whereas the link 28b and a link 30b are coupled rotatably on the other shaft 34b to form a parallel link mechanism.

The ascending/descending drive means on the upper blade portion side will now be described.

A trunnion type cylinder 37 is used as the ascending/descending drive means on the upper blade portion side. A trunnion portion of the trunnion type cylinder 37 is coupled rotatably with a shaft 36 engaged with a bracket 35 mounted on the carriage C frame 5. This trunnion type cylinder 37 is coupled with a link 33, constituting the upper and lower blade portion link mechanism, through a tip end metal member 38 mounted at the tip end of a piston rod of the trunnion type cylinder 37 and a shaft 39 engaged with this tip end member 38.

The ascending/descending guide means for holding a clearance between the upper and lower blade portions will now be described.

In the above-described conventional apparatus, a guide bearing 40a and a guide bearing 40b are provided in order to maintain the respective clearances between the leading plate cutting lower blade 6 and the leading plate cutting upper blade 9 and between the trailing plate cutting lower blade 7 and the trailing plate cutting upper blade 10 during the cutting operation as well as upon the cutting operation. Guide shafts 41 and 42 that may be movable in the vertical direction are provided while being guided by these guide bearings 40a and 40b. One of the guide shafts 41 is provided on the lower side of one end side of the upper blade holder 11 and the other guide shaft 42 is provided on the lower side of the other end side of the upper blade holder 11, respectively.

By the way, in the above-described conventional apparatus, since the trunnion type cylinder 37 is used as the ascending/descending means for moving the upper blade portion up and down, in the case where the upper blade holder (upper blade portion) 11 is to be moved up and down by feeding compressed air to this trunnion type cylinder 37, the density of the used fluid is small. Accordingly, although the upper blade holder 11 should be stopped at the top dead point and held in that position, there is a fear that the upper blade portion would be lowered unintentionally due to the leakage from the piston portion or the piston rod portion of the interior of the trunnion type cylinder 37 or the piping system or the like.

As shown in Fig. 7, in order to prevent this lowering movement, a safety lock mechanism is provided with a structure in which a pin 45 mounted at a tip end of the piston rod of a cylinder 43 slidingly moving within a bracket 44 is normally inserted into a hole provided in the link 33 constituting the above-described upper blade portion ascending/descending means, and for example, if necessary (as desired), when the upper blade holder (upper blade portion) 11 is to be lowered to perform the cutting operation, the above-described cylinder 43 is operated to pull the pin 45 apart from the hole of the link 33.

As described above, in the conventional cutting apparatus for a welding machine, two guide units as the ascending/descending guide means guided by the guide bearings 12a and 12b and composed of the guide shafts 13a and 13b formed so as to be movable in the vertical direction and two guide units as the ascending/descending guide means guided by the guide bearings 26a and 26b and composed of the guide shafts 27a and 27b formed so as to be movable in the vertical direction are used when the lower holder (lower blade portion) 8 is moved up and down and when the upper blade holder (upper blade portion) 11 are moved up and down, respectively.

In addition, as the ascending/descending guide means for maintaining the clearance for maintaining and holding the clearance of the cutting blades, the guide bearings 40a and 40b are provided between the lower holder (lower blade portion) 8 and the upper holder (upper blade portion) 11 and the two guide units composed of guide shafts 41 and 42 formed so as to be guided by these bearings and movable in the vertical direction are provided.

Thus, in such a conventional apparatus, since an excessive number of guide units are used as the ascending/descending guide means between the lower blade holder (lower blade portion) 8 and the upper blade holder (upper blade portion) 11, the structure of the cutting apparatus for a welding machine, i.e., the cutting apparatus for the mushroom welding machine for metal plates in this case becomes complicated and expensive in manufacture cost.

Also, in the case where a pneumatic system is used, for example, compressed air is fed to operate the trunnion type cylinder 37 as the ascending/descending drive source for ascending/descending the upper blade holder (upper blade portion) 11, there is a problem in that the holder could not be stopped immediately by the compression property of air when the upper blade holder 11 is to be stopped in emergency due to some reason on the way of the ascending/descending operation thereof.

Also, in a manufacturing process of a welding machine, an exchange work for parts for maintenance or the like, in the case where the cutting lower blade and the cutting upper blade are assembled and the clearance of the assembly thereof is adjusted or confirmed, it is impossible to stop immediately the blades at a desired position due to the compression property of air or it is also impossible to perform an inching operation or the like. For this reason, there is a problem that it takes a large amount of labor for the adjustment or confirmation of the clearance.

US-A-2753937 discusses a cutting apparatus, suitable for mounting upon a welding machine, which comprises a pair of upper and lower blade portions. Therein is disclosed a simplified frame set of shears, where the shears are moved toward and away from each other by a set of levers. The system is operable to provide minimum strain on the frame during shearing. No discussion is made, however, of using a hydraulic drive means linked with the upper blade portion ascending/descending link means, which allows the means to be stopped and held at any desired position. Such a system, affords effective emergency stops of the shears.

### SUMMARY OF THE INVENTION

In order to overcome the above-noted defects, an object of the present invention is to provide a cutting apparatus for a welding machine, which is simple in structure and superior in operability.

According to a first aspect of the present invention, there is provided a cutting apparatus for a welding machine, comprising a pair of upper and lower blade portions facing to each other, an upper blade portion ascending/descending link means for moving the upper blade portion up and down to the lower blade portion, a plurality of ascending/descending guide means for guiding abutment between the upper and lower blade portions, and an ascending/descending drive means for ascending/descending the upper blade portion through the upper blade portion ascending/descending link means, characterized by further comprising a hydraulic drive means normally depending upon the operation of the upper blade portion ascending/descending link means and working as a drive source for the upper blade portion ascending/descending link means when necessary, in conjunction with the upper blade portion ascending/descending link means.

### BRIEF DESCRIPTION OF THE DRAWINGS

In the accompanying drawings:
Fig. 1 is a frontal view of a cutting apparatus for a welding machine according to the second embodiment of the present invention;
Fig. 2 is a cross-sectional view taken along the line E-E of Fig. 1;
Fig. 3 is a cross-sectional view taken along the line F-F of Fig. 2;
Fig. 4 is a cross-sectional view taken along the line G-G of Fig. 3;
Fig. 5 is a frontal view showing a conventional cutting apparatus for a welding machine;
Fig. 6 is a view taken along the line A-A of Fig. 5;and Fig. 7 is a view taken along the line B-B of Fig. 6.

### DETAILED DESCRIPTION OF THE PREFERRED EMBODIMENTS

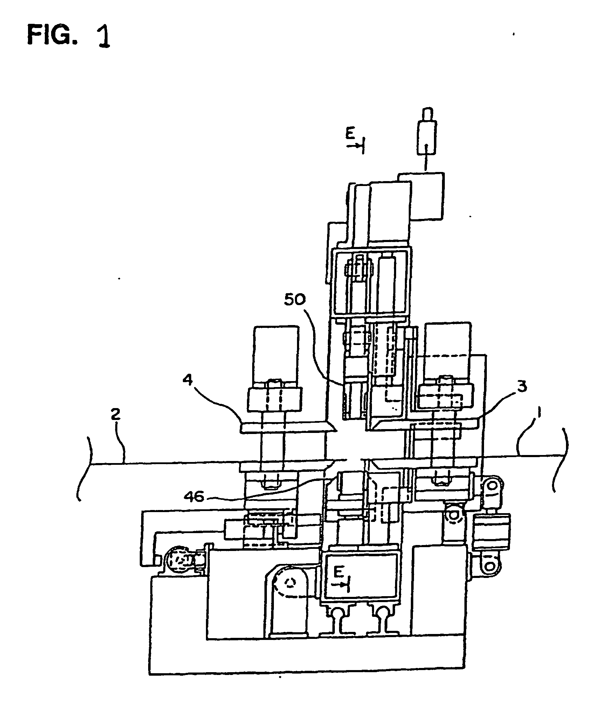

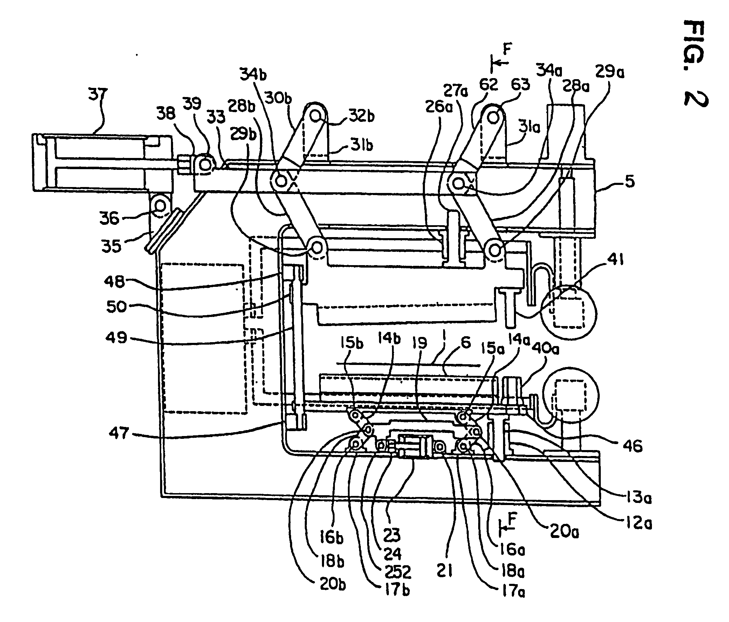

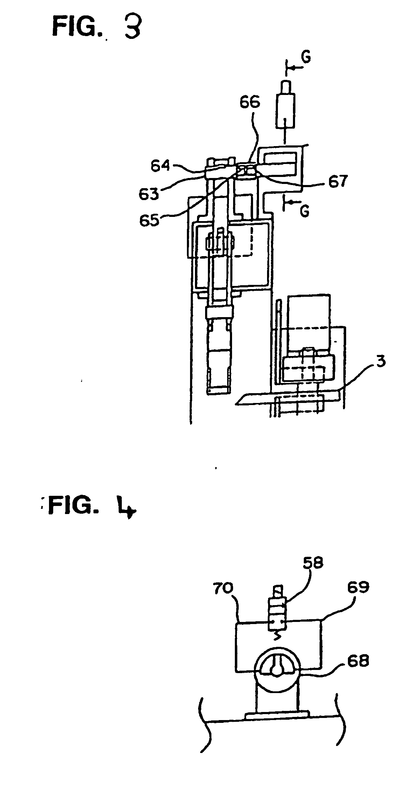

A cutting apparatus for a seam welding machine in accordance with the present invention will now be described with reference to Figs. 1 to 4. Fig. 1 is a frontal view, Fig. 2 is a cross-sectional view taken along the line E-E of Fig.1 and Fig. 3 is a cross-sectional view taken along the line F-F of Fig. 2. Fig.4 is a cross-sectional view taken along the line G-G of Fig. 3. Incidentally, in Figs. 1 to 4, the same reference numerals are used to indicate the components or members having the same function and structure in Figs. 5 to 7, and explanation therefor will be omitted.

An ascending/descending means for guiding abutment between an upper blade and a lower blade will now be described with reference to Figs. 1 and 2.

First of all, on the side of the lower blade portion, a guide unit as the ascending/descending guide means composed of a guide bearing 12a mounted on a carriage C frame 5 as the apparatus frame and a guide shaft 13a guided by the guide bearing 12a for guiding one end of the lower blade holder 46 movably in the vertical direction is provided at one end side of the lower blade holder 46 as the lower blade portion.

Also, another guide unit as the ascending/descending guide means for the lower blade holder 46, i.e., the ascending/descending means is provided on the other end side of the above-described lower holder 46.

This guide unit is a co-use ascending/descending means and is composed of a bracket 47 and a bracket 48 mounted on the carriage C frame 5 and a guide shaft 49 fixed in the vertical direction by the bracket 47 and the bracket 48. The end portion of the other end side of the lower blade holder 46 is guided by the guide shaft 49 of this co-use ascending/descending guide means and engaged movably in the vertical direction.

On the other hand, on the side of the upper blade portion, a guide unit as the ascending/descending guide unit composed of a guide bearing 26a mounted on the carriage C frame 5 as the apparatus frame and a guide shaft 27a guided by the guide bearing 26a for guiding one end of an upper blade holder 50 movably in the vertical direction is provided at one end side of the upper blade holder 50 as the upper blade portion.

Also, on the other end side of the above-described upper blade holder 50, the upper blade portion is guided by the guide shaft 49 of the above-described co-use ascending/descending guide means mounted on the carriage C frame 5 and is movable in the vertical direction.

Namely, the other end portion of the upper blade holder 50 uses the co-use ascending/descending guide means in common for the above-described lower blade holder 46.

Compressed air is fed to a trunnion type cylinder 37 as an ascending/descending drive means for the upper blade holder 50.

The upper blade holder 50 is fitted to the guide shaft 49 fixed by the bracket 47 and the bracket 48 mounted on the above-described carriage C frame 5 and is guided by the guide shaft 49 movably in the vertical direction in the same manner as in Figs. 1 to 2.

An ascending/descending link means will now be described.

One end side of a link 28a constituting the upper blade ascending/descending link means of the ascending/descending link means is coupled rotatably with a shaft 29a fitted on the upper side of one end side of the upper holder 50 as the upper blade portion, whereas the other end side of a link 28b is coupled rotatably with a shaft 29b fitted on the upper side of the other end side of the upper blade holder 50.

Also, one end side of a link 62 constituting the upper blade portion ascending/descending link is coupled with a shaft 63 engaged with a bracket 31a mounted on the upper side of the carriage C frame 5 as the apparatus frame so as to make it possible to transmit the torque through a key 64.

In the same manner, one end side of a link 30b constituting the upper blade portion ascending/descending link is coupled rotatably with a shaft 32b engaged with a bracket 31b mounted on the upper side of the carriage C frame 5.

An ascending/descending drive means for moving the upper blade portion up and down will now be described.

A shaft 34a and a shaft 34b are provided to a link 33 constituting the upper blade portion ascending/descending link, and the link 63 and the link 30a are coupled rotatably with the shaft 34a and the link 28b and the link 30b are coupled rotatably with the shaft 34b to form the parallel link mechanism.

Also, in this link 33, a trunnion portion of the trunnion type cylinder 37 is coupled rotatably with a shaft 36 engaged with a bracket 35 mounted on the carriage C frame 5 as the apparatus frame, through a tip end member 38 mounted at the tip end of a piston rod of the trunnion type cylinder 37 and a shaft 39 engaged with this tip end member 38.

Thus, the upper blade ascending/descending link constituting the ascending/descending link means is driven by the trunnion type cylinder 37 as the ascending/descending drive means so that the upper blade portion is raised to the lower blade portion.

A hydraulic drive means as a drive source for the upper blade ascending/descending link means when necessary and normally depending upon the operation of the upper blade ascending/descending link means will now be described in conjunction with the upper blade ascending/descending link means.

A hydraulic swing motor is used as the hydraulic drive means.

In Fig. 3, the hydraulic swing motor 68 is provided on the carriage C frame 5 as the apparatus frame and constructed so that its output shaft transmits the torque through the key 67, the shaft joint 66 and the key 65 to the shaft 63 (Fig. 2) of the link 62 of the upper blade portion ascending/descending link means constituting the ascending/descending link means.

Control of this hydraulic swing motor 68 will now be described.

In Fig. 4, a pipe 69 is connected to one piping port of a hydraulic "opening and closing" solenoid valve 58 as an opening/closing valve from one piping port of the hydraulic swing motor 68, and a pipe 70 is connected to the other piping port of the hydraulic opening/closing solenoid valve 58 from the other piping port of the hydraulic swing motor 68, respectively, to form a hydraulic circuit as the control circuit.

Of course, the hydraulic working oil is filled in the hydraulic swing motor 68, pipe 69, hydraulic opening/closing solenoid valve 58 and pipe 70.

Ever if the cylinder 37 as the ascending/descending means is of a pneumatic type and it is difficult to maintain the self-holding function of the cylinder 37 due to the shortage of the pneumatic pressure caused by the stop of electric supply, if a solenoid valve having a port that is to be closed when the electric supply is stopped is used as the opening/closing valve, the latter is closed to stop the rotation of the swing motor. Accordingly, it is possible to stop the movement of the upper blade portion ascending/descending means through the rotary shaft 63 and the link 62, and it is possible to stop the up-and-down movement of the upper blade portion.

Incidentally, since the opening/closing valve (solenoid valve) 58 is opened in the normal operation, the swing motor is operated dependently, and there is no harm against the operation of the upper blade holder 50.

Also, it is possible to reduce the number of the guide units as the ascending/descending means by one in comparison with the conventional case.

## Claims

1. A cutting apparatus for a welding machine, comprising a pair of upper and lower blade portions facing to each other, an upper blade portion ascending/descending link means (28a) for moving the upper blade portion up and down to the lower blade portion, a plurality of ascending/descending guide means (26a, 27a) for guiding the abutment between the upper and lower blade portions, and an ascending/descending drive means (37) for ascending/descending the upper blade portion through said upper blade portion ascending/descending link means, (28a)
**characterized in that**
the cutting apparatus further comprises
a hydraulic drive means (37) normally depending upon the operation of said upper blade portion ascending/descending link means (28a) and working as a drive source for said upper blade portion ascending/descending link means (28a) when necessary, in conjunction with said upper blade portion ascending/descending link means. (28a)

## Patentansprüche

1. Schneidvorrichtung für eine Schweißmaschine, wobei die Schneidvomchtung folgendes aufweist: ein Paar von einem oberen und einem unteren Messerbereich, die einander zugewandt sind, eine Aufwärts-/Abwärts-Gelenkeinrichtung (28a) für den oberen Messerbereich, um den oberen Messerbereich aufwärts und abwärts zu dem unteren Messerbereich zu bewegen, eine Vielzahl von Aufwärts-/Abwärts-Führungseinrichtungen (26a, 27a) zum Fuhren bis zum Anschlag zwischen dem oberen und dem unteren Messerbereich, und eine Aufwärts-/Abwärts-Antriebseinrichtung (37), um den oberen Messerbereich durch die Aufwärts-/Abwärts-Gelenkeinrichtung (28a) für den oberen Messerbereich aufwärts-/abwärts zu bewegen,
**dadurch gekennzeichnet, daß**
die Schneidvorrichtung ferner folgendes aufweist: eine hydraulische Antriebseinrichtung (37), die normalerweise von dem Betrieb der Aufwärts-/Abwärts-Gelenkeinrichtung (28a) für den oberen Messerbereich abhängig ist und erforderlichenfalls als eine Antriebsquelle für die Aufwärts-/Abwärts-Gelenkeinnchtung (28a) für den oberen Messerbereich in Verbindung mit der Aufwärts-/Abwärts-Gelenkeinrichtung (28a) fur den oberen Messerbereich wirksam ist.

## Revendications

1. Appareil de coupe pour une machine à souder, comprenant une paire de portions de lame supérieure et inférieure orientées l'une vers l'autre, un moyen de liaison de montée/descente de la portion de lame supérieure (28a) pour déplacer la portion de lame supérieure vers le haut et vers le bas à une portion de lame inférieure, plusieurs moyens de guidage de montée/descente (26a, 27a) pour guider la butée entre les portions de lame supérieure et inférieure et un moyen d'entraînement de montée/descente (37) pour monter/descendre la portion de lame supérieure par ledit moyen de liaison de montée/descente (28a) de la portion de lame supérieure,
**caractérisé en ce que**
l'appareil de coupe comprend en outre
un moyen d'entraînement hydraulique (37) dépendant normalement du fonctionnement dudit moyen de liaison de montée/descente (28a) de la portion de lame supérieure et fonctionnant comme source d'entraînement dudit moyen de liaison de montée/descente (28a) de la portion de lame supérieure lorsque cela est nécessaire, conjointement avec ledit moyen de liaison de montée/descente (28a) de la portion de lame supérieure.
